# EUROPEAN PATENT SPECIFICATION

(11) **EP 1 683 975 B1**
(45) Date of publication and mention of the grant of the patent: **19.03.2008**
(21) Application number: 05001293.9
(22) Date of filing: 22.01.2005
(51) Int. Cl.: F16B 7/04, F16B 7/18, A63B 22/00

(54) **Apparatus for connecting support bars of a sport equipment**
Vorrichtung zum Verbinden von Trägerstangen eines Sportgerätes
Dispositif pour connecter des barres de support d'un appareil de sport

(43) Date of publication of application: 26.07.2006
(73) Proprietor: Wang, Leao, Taiping City, Taichung Hsien, Taiwan 411 (TW)
(72) Inventor: Wang, Leao, Taiping City, Taichung Hsien, Taiwan 411 (TW)
(74) Representative: Panten, Kirsten

(56) References cited:
- DE-A1- 2 949 814
- FR-A- 1 562 522
- US-A- 4 440 518

## Description

### BACKGROUND OF THE INVENTION

### 1. Fields of the invention

The invention relates to an apparatus for connecting support bars of a sport equipment.

### 2. Description of the Related Art

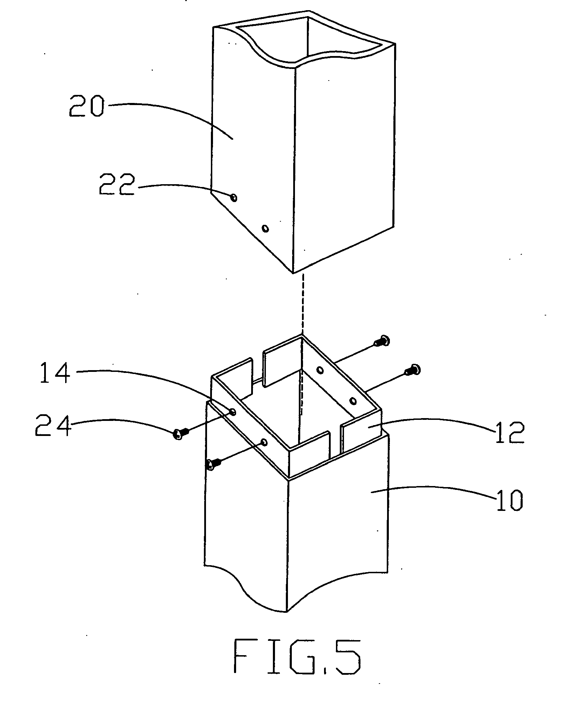

The chassis of most popular sport equipments (such as treadmill, spinner bike) consists of several connecting bars. Please refer to FIG. 5. In the fastening area of two bars 10 and 20, a connector 12 was fixed. The outer dimensions of this connector are exactly identical to the inner dimensions of the bar 20. Several fastening holes 14 are provided in the connector 12. Therefore, in connecting two bars, the first bar 10 is placed under the connector 12, which is located at one side of the second bar 20, and then the two bars will be fastened by several bolts 24 through the fastening holes 14.

Of course, this primary art of bar connection has been employed for years and it was regarded as standard without any defect. However, it brings several following disadvantages which must be taken into consideration.
1. Firstly, in order to ensure the expecting connecting strength, several bolts are employed to protect the connection from being loosened. However, to use too many fastening parts increases the difficulties in the assembly and disassembly.
2. The flatness in the connecting area is influenced to a great extent.
3. All the fastening bolts exposed. In case of that some bolts are not firmly tightened or exposed to a large extent, it can be dangerous for people around.
4. When some bolts are lost unexpectedly, we must only use the same bolt with same dimensions and pitch; otherwise, it may lead to inconvenience in future (for example, the thread is damaged).

US-A-4,440,518 discloses an apparatus for connecting support bars of a sport equipment. The apparatus comprises a first bar having a through hole, a second bar having a through holes, and a means for connecting the bars having two elements separable by threaded screws for engaging the interior walls of the support bars. The screws are threaded into one element and have affixed nuts that engage the other element from inside to separate the elements. One screw has a recessed head so that a first bar may slide over it. The other projects to locate the coupling in one of the tubular sections. The projecting screw is located near an end of the coupling element, allowing the other end to be pivotally narrowed for mounting of a tubular section.

DE 29 49 814 A1 discloses an apparatus for connecting support bars of a sport equipment according to the preamble of claim 1. The apparatus comprises a first bar having a connecting portion with the same external dimensions to the internal dimensions to a second bar, the connecting portion having a through hole in two nonadjacent sides thereof; a second bar having through holes corresponding to the through holes of the first bar; and a means for connecting the bars, having two screwing nuts with internal thread and a bolt with external thread at both ends thereof, the screwing nuts being screwed on the both ends of the bolt. As there is no means for holding the means for connecting the bars in place, the bolt has to project in the through holes to prevent a displacement of the means for connecting the bar relative to the first bar and the second bar and is exposed.

### SUMMARY OF THE INVENTION

Therefore, it is an abject of the present invention to provide a new practical design which can simplify the construction of connecting parts and make the assembly and disassembly faster and more convenient.
This problem is accomplished by the features of the present claim.
Therefore, concerning the aforementioned limitations, the inventor assumes if the biding connection can replace the conventional exposing one, not only the same connecting function but also the full appearance and the safety in using bars will be ensured. Meanwhile, it will completely eliminate the danger which arises when the bolts are loosened or lost. The rapid assembly and disassembly are also available and it is very useful for the manufacturing and maintenance. The inner connection is placed in the connecting area of two bars; it couples with two moving parts, which can move synchronously with a bolt. Then, the rapid clamping connection through the extending and retracting action of the moving parts will be achieved. Refer to the potential advantages stemming from the improvement of the conventional connection, this design is a practical innovation. This point is just the main object of the invention.

### BRIEF DESCRIPTION OF THE DRAWINGS

The accomplishment of this and other objects of the invention will become apparent from the following description and its accompanying drawings of which:
FIG. 1 is a perspective exploded view of a first embodiment of an apparatus for connecting support bars of a sport equipment in accordance with the invention;
FIG. 2 is a top view of the first embodiment of the invention after assembly;
FIG. 3 is a top view of a second embodiment of the invention after assembly;
FIG. 4 is a top view of a third embodiment of the invention after assembly; and
FIG. 5 is a perspective exploded view of a conventional apparatus for connecting support bars of a sport equipment.

### DETAILED DESCRIPTION OF THE PREFERRED EMBODIMENT

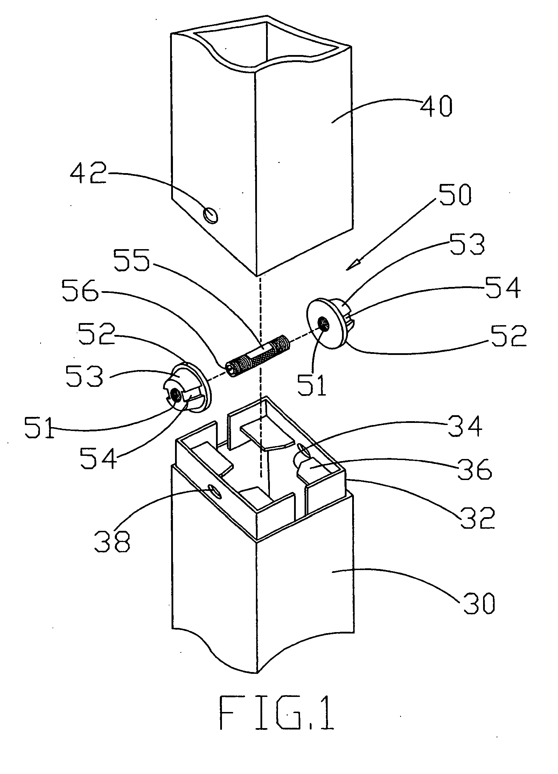

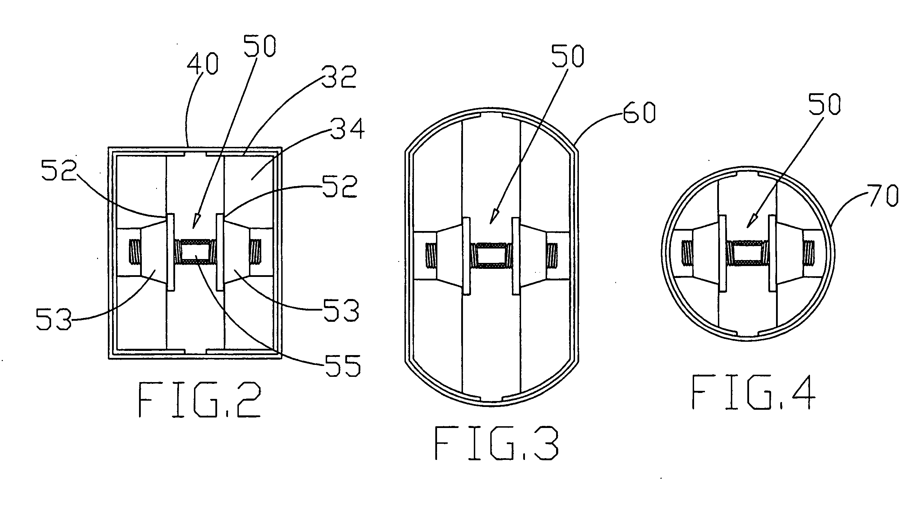

Referring to FIGS. 1 and 2, an apparatus for connecting support bars of a sport equipment in accordance with the invention includes:
a first bar 30 having a connecting portion 32 with the same external dimensions to the internal dimensions to a second bar 40, a guiding piece 36 being formed at each of four corners within the connecting portion 32, the guiding pieces 36 each having a chamfer 34, the connecting portion 32 having a through hole 38 in two nonadjacent sides thereof;
a second bar 40 having through holes 42 corresponding to the through holes 38 of the first bar 30;
means 50 for connecting the bars 30, 40, having two screwing nuts 52 with internal thread and a bolt 55 with external thread at both ends of thereof, the screwing nuts 52 being screwed on the both ends of the bolt 55, the screwing nuts 52 each having a cone-shaped body 53 tapering to the outside, the cone-shaped body 53 having a guide slot 54 at both sides thereof, the bolt 55 having an adjusting head 56.

In connecting the two bars 30, 40, the connecting means 50 is placed into the connecting portion 32 of the first bar 30 such that the chamfers 34 of the guiding pieces 36 fit in place into the guide slots 54 of the screwing nuts 52, respectively. Then, the second bar 40 is mounted on the connecting portion 32 of the first bar 30. Thereafter, a common hand tool, such as wrench, screwdriver (not illustrated in the drawing) is attached to the adjusting head 56 of the bolt 55 for turning the bolt 55 so that the screwing nuts 52 are synchronously extended outwards against the guiding pieces 36 for a firm connection of the bars 30, 40.

Of course, when disassembling, turn the bolt 55 in the opposite direction. The two screwing nuts 52 will be inwardly retracted to release the bars 30, 40.

To adjust the bolt 55, we can use the popular hand tool which has the same working head, such as screwdriver or wrench with cross, flat, inner hexagonal, outer hexagonal head etc.

Furthermore, as shown in FIGS. 3 and 4, , the means 50 for connecting oval bars 60, round bars 70, or hollow bars can be reshaped according to the principle of the invention; therefore, the invention has a wide practical application.

## Claims

1. An apparatus for connecting support bars of a sport equipment, comprising:
a) a first bar (30) having a connecting portion (32) with the same external dimensions to the internal dimensions to a second bar (40), the connecting portion having a through hole (38) in two nonadjacent sides thereof;
b) a second bar (40) having through holes (42) corresponding to the through holes of the first bar; and
c) means (50) for connecting the bars (30,40), having two screwing nuts (52) with internal thread and a bolt (55) with external thread at both ends thereof, the screwing nuts (52) being screwed on the both ends of the bolt
**characterized in that**
a guiding piece (36) is formed at each of four corners within the connecting portion, the guiding pieces (36) each having a chamfer (34), and that
the screwing nuts each having a cone-shaped body (53) tapering to the outside, the cone-shaped body (53) having a guide slot (54) at both sides thereof, the bolt (55) having an adjusting head (56).

## Patentansprüche

1. Vorrichtung zum Verbinden von Stützstangen eines Sportgeräts mit:
a.) einer ersten Stange (30), die einen Verbindungsabschnitt (32) mit den gleichen äußeren Abmessungen wie die inneren Abmessungen wie eine zweite Stange (40) hat, wobei der Verbindungsabschnitt ein durchgehendes Loch (38) in zwei nicht benachbarten Seiten davon hat;
b.) der zweiten Stange (40), die durchgehende Löcher (42) hat, welche den durchgehenden Löchern der ersten Stange entsprechen;
c.) einem Mittel zum Verbinden der Stangen (30, 40), das zwei Schraubmuttern (52) mit einem inneren Gewinde und einem Stift (55) mit einem äußeren Gewinde an dessen beiden Enden hat, wobei die Schraubmuttern (52) auf beiden Enden des Stiftes geschraubt sind,
**dadurch gekennzeichnet,**
**daß** ein Führungsteil (36) an jedem der vier Ecken innerhalb des Verbindungsabschnitts ausgebildet ist, wobei die Führungsteile (36) jeweils eine Abschrägung (34) haben, und daß die Schraubmuttern jeweils einen kegelstumpfförmigen Körper (53) haben, der nach außen abgeschrägt ist, wobei der Kegelstumpfförmige Körper (53) einen Führungsschlitz (54) an dessen beiden Seiten hat, wobei der Stift (55) einen Anpassungskopf (56) hat.

## Revendications

1. - Appareil pour connecter des barres de support d'un appareil de sport, comprenant :
(a) une première barre (30) ayant une partie de liaison (32) avec les mêmes dimensions externes que les dimensions internes d'une seconde barre (40), la partie de liaison ayant un trou traversant (38) dans deux côtés non adjacents de celle-ci ;
(b) une seconde barre (40) ayant des trous traversants (42) correspondant aux trous traversants de la première barre ; et
(c) un moyen (50) pour connecter les barres (30, 40), ayant deux écrous de vissage (50) avec un filetage interne et un boulon (55) avec un filetage externe aux deux extrémités de celui-ci, les écrous de vissage (52) étant vissés sur les deux extrémités du boulon,
**caractérisé par le fait que**
une pièce de guidage (36) est formée à chacun des quatre coins à l'intérieur de la partie de liaison, les pièces de guidage (36) ayant chacune un chanfrein (34), et que les écrous de vissage ont chacun un corps (53) en forme de cône s'effilant vers l'extérieur, le corps en forme de cône (53) ayant une fente de guidage (54) sur les deux côtés de celui-ci, le boulon (55) ayant une tête d'ajustement (56).
